# DEMANDE DE BREVET EUROPEEN

(11) **EP 4 575 669 A1**
(43) Date de publication de la demande: **25.06.2025**
(21) Numéro de dépôt: 23218276.6
(22) Date de dépôt: 19.12.2023
(51) Int. Cl.: G04B 19/06, G04B 19/12, G04B 39/00, G04C 10/02, G04D 3/00, B23K 26/00, B23K 26/364, B23K 26/53, C03B 33/02, C03B 33/10, C03C 15/02, C30B 33/10, C30B 29/20

(54) **PROCÉDÉ DE RÉALISATION D'UNE OUVERTURE SUR UN COMPOSANT HORLOGER EN VERRE OU SAPHIR**

(71) Demandeur: Nivarox-FAR S.A., 2400 Le Locle (CH)
(72) Inventeur: FETTICHA, Oualid, 2014 Bole (CH); BAILAT, Julien, 2503 Bienne (CH)
(74) Mandataire: ICB SA

(57) **Abrégé**

Un aspect de l'invention concerne un procédé de réalisation d'une ouverture sur un composant horloger en verre ou en saphir, selon lequel, dans une première étape (100) on réalise ou on approvisionne une ébauche en verre ou saphir, dans une deuxième étape (200) on définit une géométrie d'ouverture et on découpe l'ouverture sous forme de trou ou de contour par un procédé de filamentation laser, dans une troisième étape (300) on sépare par gravure chimique, d'une part le composant horloger comportant l'ouverture, et d'autre part la chute consécutive au procédé de filamentation. L'invention concerne aussi une montre comportant un composant horloger en verre ou en saphir avec au moins une ouverture réalisée selon ce procédé.

## Description

### Domaine technique de l'invention

L'invention concerne un procédé de réalisation d'une ouverture sur un composant horloger en verre ou en saphir.

L'invention concerne encore une montre comportant un composant horloger en verre ou en saphir avec au moins une ouverture réalisée selon ce procédé.

L'invention concerne le domaine de la fabrication des composants horlogers en matériaux fragiles telles que verre ou saphir.

### Arrière-plan technologique

L'usinage des composants horlogers en verre ou similaire est très délicat, et d'importants taux de rebut sont constatés lors des opérations de perçage ou de confection d'ouvertures, en particulier à cause de la présence d'égrisures de trop grande taille.

### Résumé de l'invention

L'invention se propose de mettre au point un procédé permettant de pratiquer un perçage ou une ouverture sur un composant horloger en verre ou similaire, sans le briser, et sans égrisures.

A cet effet, l'invention concerne un procédé de réalisation d'une ouverture sur un composant horloger en verre ou en saphir, selon la revendication 1.

L'invention concerne encore une montre comportant un composant horloger en verre ou en saphir avec au moins une ouverture réalisée selon ce procédé.

### Brève description des figures

Les buts, avantages et caractéristiques de l'invention apparaîtront mieux à la lecture de la description détaillée qui va suivre, en référence aux dessins annexés, où :

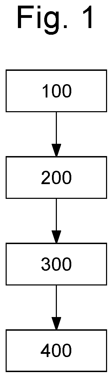

- la figure 1 est un logigramme exposant les étapes du procédé selon l'invention.

### Description détaillée de l'invention

Lors de la réalisation de cadrans de montre en verre ou en saphir, en particulier de cadrans de montre avec une cellule solaire intégrée, il est nécessaire de mettre au point un procédé de perçage du verre permettant à la fois un contour précis, sans ébréchure ni égrisure, sans dépouille, et permettant de remplir les conditions de test aux chocs.

Un tel procédé de perçage est nécessaire pour réaliser un trou pour le passage des aiguilles, ou aussi pour réaliser un guichet, des trous d'index, ou tout autre ouverture dans une glace ou un cadran en verre ou saphir ou tout autre matériau similaire, notamment en émail. Dans la suite de l'exposé on utilisera le terme générique « verre » pour désigner l'un ou l'autre de ces matériaux.

Divers procédés sont envisageables.

Un premier procédé consiste à réaliser la découpe du verre par découpe laser, par ablation (gravure) successive de la matière : la découpe se réalise par ablation successive de couches de verre avec plusieurs passages, la focalisation du laser nécessite de découper le verre en escalier jusqu'à le percer. Ce procédé produit par conséquent une dépouille qui concentre les contraintes mécaniques lors des tests aux chocs et fragilise la pièce.

Un deuxième procédé consiste à réaliser la découpe par usinage chimique du verre par la technique « SACE » (de l'anglais « spark assisted chemical etching »), ou gravure chimique assistée électriquement, qui est une technologie de micro-usinage pour les matériaux non conducteurs, principalement le verre, basée sur la gravure assistée par la chaleur. En général, pendant la gravure chimique assistée électriquement, l'enlèvement de matière en profondeur se déroule à une vitesse rapide atteignant 100 µm/s pour les 100 premiers µm, puis il ralentit pour les profondeurs supérieures à 300 µm. Le verre à percer est immergé dans une solution alcaline (NaOH ou KOH). Un outil chauffé entre 500°C et 600°C est enfoncé dans le verre, l'énergie thermique activant la gravure chimique du verre autour de l'outil. En déplaçant l'outil le verre est percé et découpé selon le tracé imposé à l'outil. Cette approche permet une gravure chimique du verre qui permet de réussir les tests aux chocs, mais elle est particulièrement lente.

Un troisième procédé consiste à réaliser la découpe par filamentation et séparation laser : le verre est d'abord poinçonné par un procédé laser dit de filamentation avec un faisceau laser focalisé par une lentille conique (lentille de Bessel). La filamentation laser est la propagation d'un faisceau laser dans un milieu transparent sans diffraction, grâce à l'effet Kerr optique qui génère une modification de l'indice de réfraction du milieu en présence d'un champ laser intense, résultant en l'auto-focalisation du faisceau. Ce régime est avantageusement obtenu en propageant une impulsion lumineuse délivrée par un laser femtoseconde amplifié. Le verre est percé de part en part, à intervalles réguliers (5 à 10 µm) par des petits trous de quelques µm de diamètre (notamment 2 µm à 3 µm). Le contour ainsi réalisé en pointillé est ensuite parcouru une seconde fois à l'aide d'un laser CO₂ qui chauffe localement, et, par chocs thermiques, sépare le verre le long du chemin filamenté. Cette technique est très rapide, mais nécessite des lignes de découpes pour libérer les pièces de la plaque de verre. Il est donc difficile voire impossible de sortir un disque de petite dimension d'une plaque de verre sans aménager des chemins de découpe jusqu'au disque.

### En résumé :

- le premier procédé de découpe laser permet d'obtenir une géométrie comportant des trous et des contours, sa productivité est faible, et la résistance aux chocs et à la flexion de l'objet réalisé est faible.
- le deuxième procédé de découpe par usinage chimique de type « SACE » de gravure chimique assistée électriquement permet d'obtenir une géométrie comportant des trous et des contours, sa productivité est très faible, et la résistance aux chocs et à la flexion de l'objet réalisé est bonne.
- le troisième procédé de découpe par filamentation et séparation laser permet d'obtenir une géométrie comportant seulement des contours, sa productivité est haute, et la résistance aux chocs et à la flexion de l'objet réalisé est excellente.

L'invention s'attache donc à mettre au point un nouveau procédé qui élimine les inconvénients des trois procédés cités ci-dessus, et qui combine leurs avantages : le nouveau procédé doit permettre d'obtenir une géométrie comportant des trous et des contours, avec une haute productivité, et une résistance aux chocs et à la flexion de l'objet réalisé excellente.

L'objet de l'invention est ainsi une quatrième approche permettant de réaliser les géométries possibles avec la gravure chimique avec étincelage « SACE », alliée à la productivité de la filamentation par laser. La filamentation est utilisée pour réaliser la géométrie choisie dans la plaque de verre. La découpe sélective sur le chemin filamenté est ensuite assurée par gravure dans une solution alcaline (KOH ou NaOH).

Le procédé de réalisation d'une ouverture sur un composant horloger en verre ou en saphir, selon l'invention, comporte une première étape 100 lors de laquelle on réalise ou on approvisionne une ébauche en verre ou saphir. Dans une deuxième étape 200 on définit une géométrie d'ouverture et on découpe l'ouverture sous forme de trou ou de contour par un procédé de filamentation laser, notamment en utilisant un laser pico-seconde dont on focalise le faisceau par une lentille conique de Bessel. Dans une troisième étape 300 on sépare par gravure chimique, d'une part le composant horloger comportant l'ouverture, et d'autre part la chute consécutive au procédé de filamentation.

L'étape de filamentation selon l'invention est de préférence réalisée avec un laser à filamentation à impulsions infra-rouge ultra-courtes, notamment un picolaser dit aussi laser picoseconde, ou un femtolaser infra-rouge.

L'invention donne de bons résultats avec un picolaser, aussi appelé laser picoseconde, avec une fréquence comprise entre 170 et 1000 kHz, et une durée d'impulsion inférieure à 15 ps, et une longueur d'onde voisine de 1064 nm, c'est-à-dire avec un écart maximal de 10% de part et d'autre de cette valeur nominale. Ces paramètres conviennent bien à la réalisation d'une ouverture sur une glace, ou un cadran, ou un fond de montre, en saphir ou en verre.

Pour d'autres applications d'optique expérimentale, il est possible d'utiliser un femtolaser, la durée d'impulsion peut être comprise entre 100 et 200 femtosecondes avec une fréquence comprise entre 0,5 Hz et 10 Hz, par exemple un laser de durée d'impulsion 150 femtosecondes, et de longueur d'onde 800 nm avec une fréquence de 1 kHz, ou encore un laser générateur d'impulsions laser amplifiées par un titane-saphir, durée d'impulsion 120 femtosecondes et de longueur d'onde 800 nm avec une fréquence de 1 kHz, ou similaire. Mais naturellement le temps opératoire est très supérieur à celui atteint avec la mise en oeuvre d'un picolaser, qui se révèle suffisante et bien adaptée aux applications horlogères.

Lors de la deuxième étape 200, on réalise des perforations du verre qui mesurent quelques micromètres, notamment entre 1 micromètre et 10 micromètres, et sont espacées de quelques micromètres, notamment entre 2 et 20 micromètres, plus particulièrement entre 5 µm et 7 µm.

Avantageusement on utilise comme verre un alumino-borosilicate, par exemple un verre à faible coefficient de dilatation thermique, similaire à celui d'une plaquette de silicium, avec une grande stabilité thermique, une qualité optique élevée, d'excellentes propriétés diélectriques et une très faible rugosité, sans alcali, ni arsenic ni antimoine.

La gravure chimique est réalisée dans une solution alcaline, soit de la potasse ou de la soude caustique, à température comprise entre 100°C et 120°C. Plusieurs plaques peuvent être processées en parallèle ce qui offre une grande productivité, malgré des temps de gravure longs de plusieurs heures, notamment de 3 à 8 heures.

Les bords de découpe ainsi réalisés ne présentent que très peu d'égrisures, qui sont de taille inférieure à 20 µm. Ce résultat est à l'origine des très intéressantes propriétés de tenue au chocs obtenues.

L'invention concerne encore un composant d'horlogerie, réalisé en verre ou en saphir, selon le procédé.

Et, plus particulièrement, un composant d'horlogerie sur lequel est déposé une cellule solaire, par exemple un cadran avec un trou de centre ou un guichet.

Ainsi, plus particulièrement, on réalise l'ouverture sur un composant horloger prévu pour recevoir une cellule solaire, et, après la troisième étape 300, dans une quatrième étape 400 on dépose une cellule solaire sur le verre du composant, pour réaliser une glace ou un cadran de montre photovoltaïque.

Après la réalisation d'une ouverture telle qu'un trou de centre ou un guichet, en amont avec le procédé exposé ci-dessus, il devient aisé de déposer ensuite une cellule solaire sur le verre, de sorte à réaliser un cadran de montre photovoltaïque. La cellule solaire peut, soit être déposée directement sur le verre selon les procédés connus de l'homme du métier, pour une cellule solaire à couches minces, selon les technologies à base de silicium amorphe, perovskite (une cellule photovoltaïque à pérovskite est un type de cellule photovoltaïque dont la couche active est constituée d'un matériau de formule générale ABX3 à structure pérovskite dans laquelle A est un cation, généralement de méthylammonium CH3NH3+ (MA), de formamidinium CH(NH2)2+ ou de césium Cs+, B est un cation d'étain Sn2+ ou de plomb Pb2+, et X est un anion halogénure tel que chlorure CI-, bromure Br- ou iodure 1-1,2), CIGS (cuivre, indium, gallium, sélénium ou soufre), tellure de cadmium, ou similaire, soit être rapportée sur le verre.

L'invention concerne encore une montre comportant un composant horloger en verre ou en saphir, notamment une glace ou un cadran ou un fond, avec au moins une ouverture réalisée selon ce procédé.

Le procédé selon l'invention permet d'obtenir une haute productivité et, de manière surprenante, une résistance mécanique des pièces qui est nettement supérieure à celle obtenue par la technique actuellement utilisée de l'usinage chimique SACE ou gravure chimique avec étincelage, ou d'une découpe laser par ablation.

En somme, la présente invention permet de réaliser tous les designs de pièces en verre envisagés, trous et contours et offre une haute productivité. En outre, de manière surprenante la résistance des pièces aux tests de flexion mécanique est significativement supérieure aux autres techniques précitées et en particulier à l'usinage chimique SACE, avec une force appliquée avant casse de l'ordre de quatre fois supérieure.

L'application de l'invention à des glaces et cadrans de montre est particulièrement appropriée.

## Revendications

1. Procédé de réalisation d'une ouverture sur un composant horloger en verre ou en saphir, selon lequel, dans une première étape (100) on réalise ou on approvisionne une ébauche en verre ou saphir, dans une deuxième étape (200) on définit une géométrie d'ouverture et on découpe l'ouverture sous forme de trou ou de contour par un procédé de filamentation laser, dans une troisième étape (300) on sépare par gravure chimique, d'une part le composant horloger comportant l'ouverture, et d'autre part la chute consécutive au procédé de filamentation.

2. Procédé selon la revendication 1, **caractérisé en ce que**, dans ladite deuxième étape (200), on met en oeuvre ledit procédé de filamentation laser, en utilisant un laser pico-seconde dont on focalise le faisceau par une lentille conique de Bessel.

3. Procédé selon la revendication 2, **caractérisé en ce qu'**on utilise un laser picoseconde infra-rouge avec une fréquence comprise entre 170 et 1000 kHz, et une durée d'impulsion inférieure à 15 ps.

4. Procédé selon la revendication 3, **caractérisé en ce qu'**on réalise lesdites perforations du verre une longueur d'onde voisine de 1064 nm.

5. Procédé selon l'une des revendications 1 à 4, **caractérisé en ce que** lors de ladite deuxième étape (200) on réalise des perforations du verre qui mesurent entre 1 µm et 10 µm, et qui sont espacées entre 2 µm et 20 µm.

6. Procédé selon la revendication 5, **caractérisé en ce qu'**on réalise lesdites perforations du verre espacées entre 5 µm et 7 µm.

7. Procédé selon l'une des revendications 1 à 6, **caractérisé en ce que** lors de ladite première étape (100) on utilise comme verre un alumino-borosilicate, coefficient de dilatation thermique similaire à celui d'une plaquette de silicium, sans alcali, ni arsenic ni antimoine.

8. Procédé selon l'une des revendications 1 à 7, **caractérisé en ce que** lors de ladite troisième étape (300) on réalise la gravure chimique est réalisée dans une solution alcaline, à température comprise entre 80°C et 120 °C, avec une durée comprise entre 3 et 8 heures.

9. Procédé selon l'une des revendications 1 à 8, **caractérisé en ce qu'**on réalise ladite ouverture sur un composant horloger prévu pour recevoir une cellule solaire, et **en ce que**, après ladite troisième étape (300), dans une quatrième étape (400) on dépose une cellule solaire sur le verre dudit composant, pour réaliser une glace ou un cadran de montre photovoltaïque.

10. Procédé selon la revendication 9, **caractérisé en ce qu'**on dépose ladite cellule solaire, qui est une cellule solaire à couches minces directement sur le verre.

11. Procédé selon la revendication 9, **caractérisé en ce qu'**on rapporte ladite cellule solaire sur le verre.

12. Montre comportant un composant horloger en verre ou en saphir avec au moins une ouverture réalisée selon le procédé selon l'une des revendications 1 à 11.
